# EUROPEAN PATENT SPECIFICATION

(11) **EP 1 062 869 B1**
(45) Date of publication and mention of the grant of the patent: **03.09.2003**
(21) Application number: 00113499.8
(22) Date of filing: 26.06.2000
(51) Int. Cl.: A01K 61/02, A01K 5/02

(54) **Automatic feeding method**
Verfahren zur automatischen Fütterung
Procédé de distribution automatique d'alimentation

(30) Priority: 25.06.1999 JP 18064699; 25.06.1999 JP 18064599
(43) Date of publication of application: 27.12.2000
(60) Divisional application: 02022141.2
(73) Proprietor: YAMAHA HATSUDOKI KABUSHIKI KAISHA, Iwata-shi Shizuoka-ken, 438 (JP)
(72) Inventor: Nagatomi, Tadayoshi, c/o Yamaha Hatsudoki K.K., Iwata-shi, Shizuoka-ken, 438 (JP); Okuyama, Takashi, c/o Yamaha Hatsudoki K.K., Iwata-shi, Shizuoka-ken, 438 (JP)
(74) Representative: Grünecker, Kinkeldey, Stockmair & Schwanhäusser Anwaltssozietät

(56) References cited:
- EP-A- 0 282 683
- AT-B- 386 925
- DE-A- 3 825 504
- FR-A- 2 440 688
- FR-A- 2 560 498
- GB-A- 2 231 767
- US-A- 2 243 896
- US-A- 3 523 520

## Description

The present invention relates to an automatic feeding method for feeding a bait. In particular for feeding a bait quantitatively at a constant time in a fish preserve for cultivated fishes, or the like.

An automatic feeding apparatus for feeding bait quantitatively at a constant time has conventionally been installed in fish preserves for cultivated fishes, such as young yellowtails, sea breams, and flatfishes. The automatic feeding apparatus not only saves the labor in the feeding operations of several times a day but efficiently feeds expensive bait according to the habit of the cultivated fishes. Such an apparatus is known from e.g. DE-A-3 825 504.

In the above-mentioned automatic feeding apparatus, pellet-like bait stored in a hopper is scattered to the surroundings by a blade driven by a dispersing motor while sending out the bait by a screw feeder driven by a feeder motor.

However, if the amount of the bait to be sent out is inaccurate in sending out the pellet-like bait by the screw feeder, the feeding amount may be excessive or deficient. In the case the amount is too small, the development of the cultivated fishes is hindered, whereas in the case the amount is too large, the expensive bait is wasted.

Moreover, if the feeder motor or the dispersing motor is driven for a predetermined time even when no bait is in the hopper or the outlet of the hopper is choked with the bait, the electric power is consumed wastefully if a solar battery is used as the power source. Furthermore, there is also a demand for efficient feeding according to the habit of the cultivated fish.

In order to solve the above-mentioned conventional problems, an object of the invention is to provide an automatic feeding method which can be used with low costs.

According to an aspect of the invention, said objective is solved by an automatic feeding method of scattering a bait stored in a hopper to the surroundings by a blade driven by a dispersing motor while sending out the bait by a screw feeder driven by a feeder motor, comprising the steps of: executing a main feed feeding a first amount of the bait; and executing at least one of an inviting feed feeding a second amount of the bait less than the first amount before the main feed and an addition feed feeding a third amount of the bait less than the first amount after the main feed.

According to said aspect of the invention, since whether or not the main feed is necessary can be judged while observing the reaction of the appetite of the cultivated fishes by the inviting feed before the main feed as well as the further efficient feed can be enabled by giving a chance of feeding to the weak cultivated fishes, which failed to eat in the main feed, by the addition feed after the main feed.

Further embodiments are claimed in the subclaims.

Accordingly, there is provided an automatic feeding method capable of supplying a bait quantitatively, restraining the wasteful consumption of the electric power, and further feeding the bait efficiently.

Hereinafter the present invention is illustrated and explained by means of preferred embodiments in conjunction with the accompanying drawings. In the drawings wherein:
Fig. 1 is a perspective view of an automatic feeding apparatus according an embodiment;
Fig. 2 is an exploded perspective view of the automatic feeding apparatus;
Fig. 3 is a front view of the automatic feeding apparatus;
Fig. 4 is a side view of the automatic feeding apparatus;
Fig. 5 is a schematic plan view of the automatic feeding apparatus;
Fig. 6A is a plan view of a screw feeder;
Fig. 6B is a side cross-sectional view of the screw feeder;
Fig. 7 is an enlarged side view of the screw feeder and a blade;
Fig. 8A is a plan cross-sectional view of the blade;
Fig. 8B is a front view of the blade;
Fig. 9 is a control circuit diagram of a feeder motor;
Fig. 10 is the former half of a flow chart of the automatic feeding method; and
Fig. 11 is the latter half of the flow chart of the automatic feeding method.

Hereinafter, an embodiment will be explained in detail with reference to the drawings.

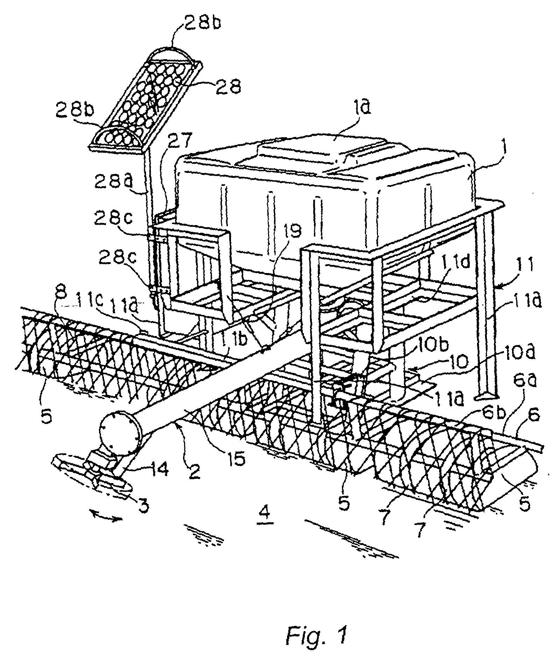

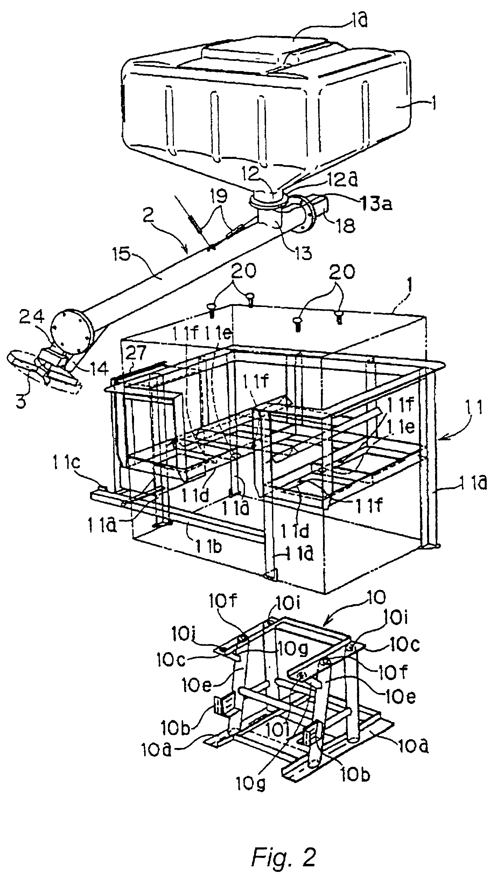

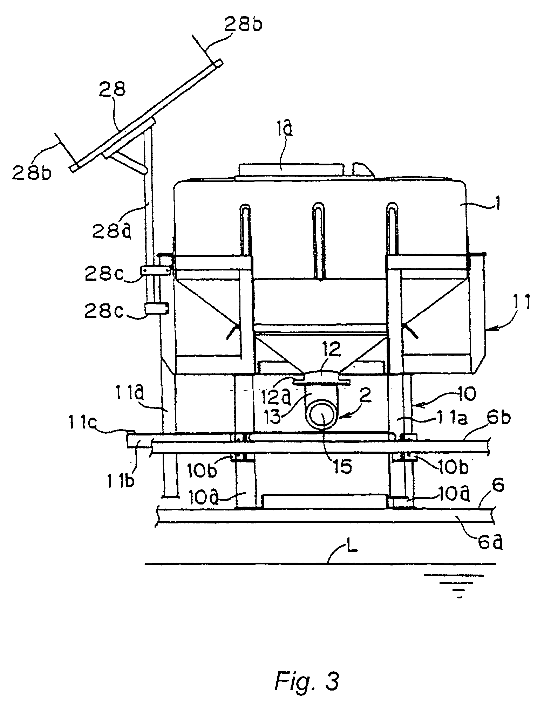

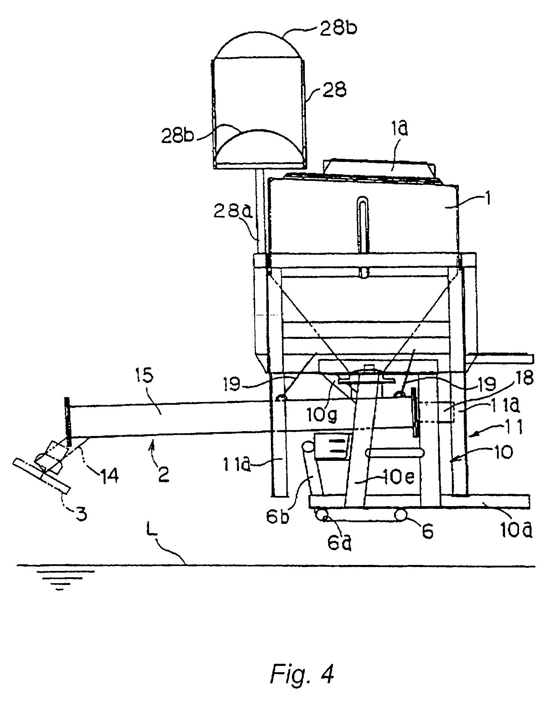

As shown in Figs. 1 to 5, an automatic feeding apparatus basically comprises a hopper 1 for storing a pellet-like bait of a cylindrical shape with an axial length larger than its diameter (for example, of about 8 mm in diameter, and about 10 mm in length), a screw feeder 2 for sending out the bait stored in the hopper 1, a blade 3 for scattering the bait sent out by the screw feeder 2 to the surroundings, a basic frame 10, and a self-supporting frame 11.

A fish preserve 4 for the cultivated fishes is constructed by fixing a horizontal part 6a of an L-shaped steel pipe scaffolding 6 on a drum can-shaped float 5 made of synthetic resin by a belt 7 and further tying a vertical part 6b of the scaffolding 6 with the end of a surrounding net 8.

A small basic frame 10 is previously placed on the horizontal part 6a of the scaffolding 6. In the small basic frame 10, a pair of right and left bottom foot brackets 10a are fixed by using bolt holes, with the horizontal part 6a of the scaffolding 6 via bolts and nuts, as well as a pair of right and left front brackets 10b are fixed by using bolt holes, with the vertical part 6b of the scaffolding 6 via bolts and nuts.

Moreover, the hopper 1, the screw feeder 2, the blade 3, and the like, are previously assembled in the large self-supporting frame 11.

The self-supporting frame 11 is provided with four vertical foot brackets 11a so that it can stand on the deck on a ship or on a quay.

A pair of right and left brackets 11d of the self-supporting frame 11 are placed on a pair of right and left upper brackets 10c in the upper part of the basic frame 10 from above, Upper end positioning pins 10f of front stays 10e for supporting the upper brackets 10c on the bottom foot brackets 10a are provided at the middle part in the longitudinal direction of the upper brackets 10c. Four bolt screw holes 10i are formed on the upper end parts of forked stays 10g of the front stays 10e and rear stays 10h.

Positioning holes 11e to be fitted with the upper end positioning pins 10f and bolt inserting holes 11f coinciding with the bolt screw holes 10i are formed on the brackets 11d of the self-supporting frame 11.

Then, the brackets 11d of the self-supporting frame 11 are placed on the upper brackets 10c of the basic frame 10 from above, and the positioning holes 11e are fitted in the upper end positioning pins 10f such that the self-supporting frame 11 is positioned in the basic frame 10. In this state, the self-supporting frame 11 can be mounted on the basic frame 10 by inserting the four bolts 20 in the bolt inserting holes 11f of the brackets 11d, and screwing and fastening with respect to the bolt screw holes 10i of the upper brackets 10c. In the case the self-supporting frame 11 is mounted on the basic frame 10 fixed on the scaffolding 6 of the fish preserve 4 for the cultivated fishes, the four foot brackets 11a are hung in midair above the water surface L.

The synthetic resin hopper 1 is fitted and fixed with the upper part of the self-supporting frame 11. An inlet pipe 13 of the screw feeder 2 is swingably supported by an outlet pipe 12 of the hopper 1. The blade 3 is supported to an outlet chute 14 of the screw feeder 2 to be tiltable in the vertical direction. An open/close lid 1a for replenishing the bait is mounted on the upper part of the hopper 1.

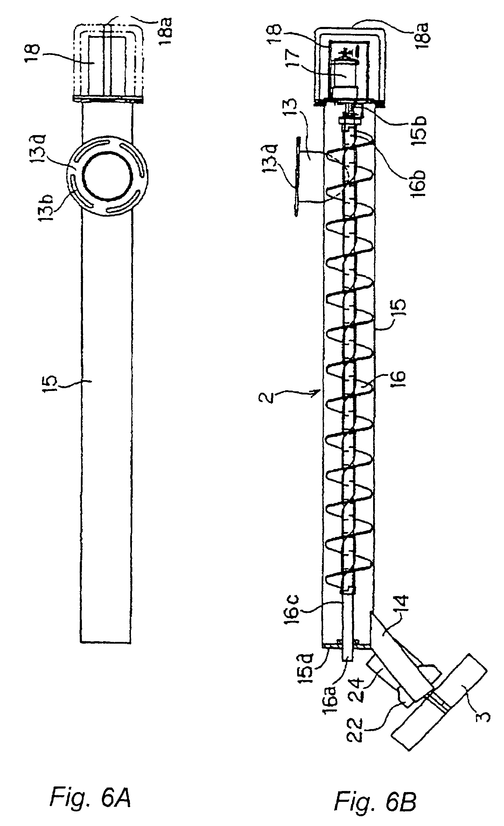

As shown in detail in Figs. 6A to 8B, the screw feeder 2 includes a screw conveyor 16 stored within an aluminum feeder pipe 15. A front shaft end part 16a of the screw conveyor 16 is rotatably supported to a front end lid 15a of the feeder pipe 15. A lacked part 16c, lacked by 2 to 3 pitches, is formed on the screw at the front shaft end part 16a side of the screw conveyor 16.

A feeder motor 17 is fixed to the outer surface of a rear end lid 15b of the feeder pipe 15. An output shaft of the feeder motor 17 is connected to a rear shaft end part 16b of the screw conveyor 16, so that the screw conveyor 16 can be rotationally driven by the feeder motor 17. According to the rotation drive of the screw conveyor 16, a bait sent out into the feeder pipe 15 from the outlet pipe 12 of the hopper 1 via the inlet pipe 13 is sent out to the outlet chute 14 direction. The feeder motor 17 is sealed in a water-proof case 18.

If a U-shaped metal guard 18a is mounted on the outer surface of the rear end lid 15b of the feeder pipe 15, the water-proof case 18 can be protected without breakage. It is preferable that the two guards 18a are mounted in a cross-shape (see the double-dot chain line). As described later, the guards 18a can be utilized for swinging the feeder pipe 15 in the horizontal direction by grasping with a hand.

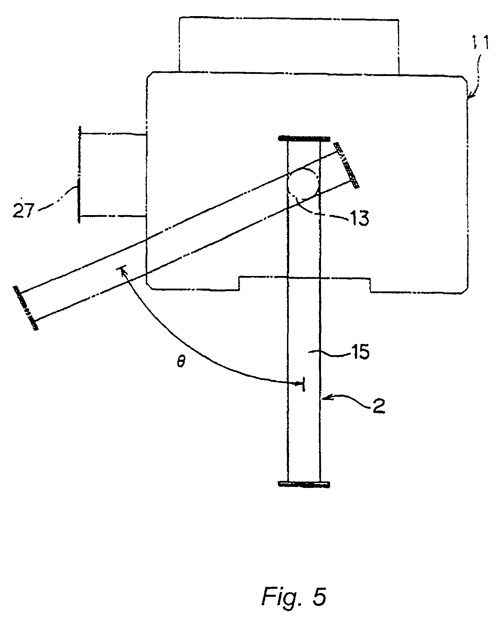

The inlet pipe 13 is welded on the upper part of the feeder pipe 15 at the rear end part side. Arc-shaped bolt inserting long holes 13b are formed on a mounting flange part 13a of the inlet pipe 13. Although it is not illustrated specifically, a bolt inserting hole is formed in a mounting flange part 12a of the outlet pipe 12 of the hopper 1. The mounting flange parts 12a, 13a can be fixed by inserting a bolt in both mounting flange parts 12a, 13a and screwing with respect to a nut, so that the inlet pipe 13 of the feeder pipe 15 can be supported by the outlet pipe 12 of the hopper 1. In the case the bolt and nut are loosened, the blade 3 side can be swung in the horizontal direction with the feeder pipe 15 with the inlet pipe 13 as the fulcrum in the angular range θ (see Fig. 5, for example, 65 degrees) of the bolt inserting long holes 13b of the mounting flange 13a.

A rail bracket 11b for supporting the lower part of the feeder pipe 15 is provided at the front part of the self-supporting frame 11 in a swinging range of the feeder pipe 15. The rail bracket 11b is provided with a stopper part 11c for stopping the feeder pipe 15 at the most swing position by contacting with the feeder pipe 15. The stopper part 11c can be eliminated.

The feeder pipe 15 is ordinarily held by a V-shaped wire 19 connecting the front part of the self-supporting frame 11 and the upper part of the feeder pipe 15 to prevent the inadvertent swing. The V-shaped wire 19 can be eliminated.

The rear end part of the outlet chute 14 having a U-shaped cross-section is welded with the lower part of the feeder pipe 15 at the front end part side so as to orient the outlet chute 14 in the oblique downward direction.

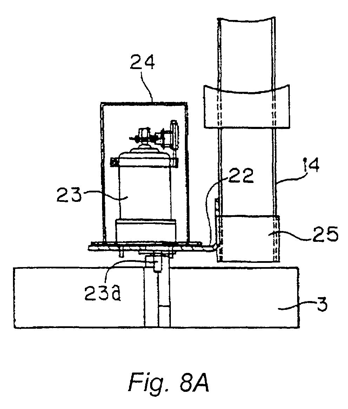

As shown in Figs. 8A and 8B, the L-shaped motor bracket 22 is fixed with one side surface of the tip end part of the outlet chute 14 by bolts and nuts. A dispersing motor 23 is fixed with the motor bracket 22, and the FRP blade 3 having four vanes, elongating so as to block the front part of the tip end part of the outlet chute 14 is fixed with an output shaft 23a of the dispersing motor 23 to enable the rotation drive of the blade 3 by the dispersing motor 23. According to the rotation drive of the blade 3, the bait sent out from the feeder pipe 15 and slid down on the outlet chute 14 can be scattered to the surroundings. The dispersing motor 23 is sealed in a water-proof case 24.

Since a channel having a U-shaped cross-section with the upper surface opened is used as the outlet chute 14 for the maintenance at the time of choking with the bait, there is a risk of jumping of the bait scattered by the blade 3 into the outlet chute 14 from the upper surface opening and hindering the slide of the bait from the outlet chute 14. Therefore, by closing the upper surface opening of the outlet chute 14 at the tip end part side by a cover 25, the jump-in of the bait can be prevented.

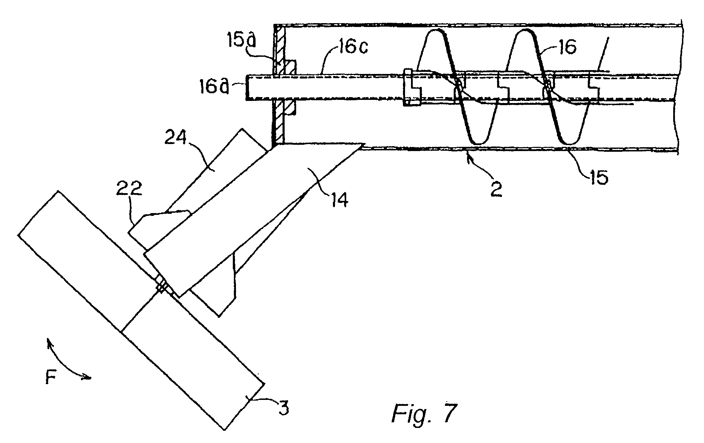

Since the motor bracket 22 is fixed with the outlet chute 14 by bolts and nuts, if the long bolt inserting holes is formed in the motor bracket 22 and the outlet chute 14, the dispersion range of the bait can be varied by tilting (see F in Fig. 7) the blade 3 with the motor bracket 22 in the vertical direction.

The feeder pipe 15 is inclined so as to orient the front end part side slightly downward (for example, about 1.5 degrees) to thereby allow the sea water entered in the feeder pipe 15 from the outlet chute 14 to spontaneously discharge from the outlet chute 14.

A control box 27 is mounted on one side part of the self-supporting frame 11. The control box 27 accommodates an operation box and a control unit.

A solar panel 28 is mounted on the front foot bracket 11a at the control box 27 side of the self-supporting frame 11 via a pole 28a fixed with metal fixtures 28c. The electricity obtained by the solar panel 28 is charged in a battery (not shown) disposed in the control box 27 so that the control unit and the motors 17, 23 can be driven by the electricity of the battery. The solar panel 28 can be mounted on the scaffolding 6 of the fish preserve 4.

A bird-preventive wire 28b, curved in an arc shape, is mounted each on the upper part and the lower part of the solar panel 28. According to the bird-preventive wires 28b, even in the case a large bird (such as a crow) intends to perch on the solar panel 28, the bird-preventive wires 28b come in contact with the feet or the wings so as to prevent perching of the bird. Accordingly, malfunction of the solar panel 28 due to the dirt of the bird droppings can be prevented. The lower one of the bird-preventive wires 28b can be eliminated from the solar panel 28.

In contrast, the feeder motor 17 and the dispersing motor 23 are controlled by the control unit of the control box 27 as follows.

First, since the screw conveyor 16 of the screw feeder 2 has a constant screw pitch, the amount of the bait to be sent out for one rotation can be previously measured (actual measurement). Thus, the bait can be sent out quantitatively by controlling the rotational frequency of the feeder motor 17.

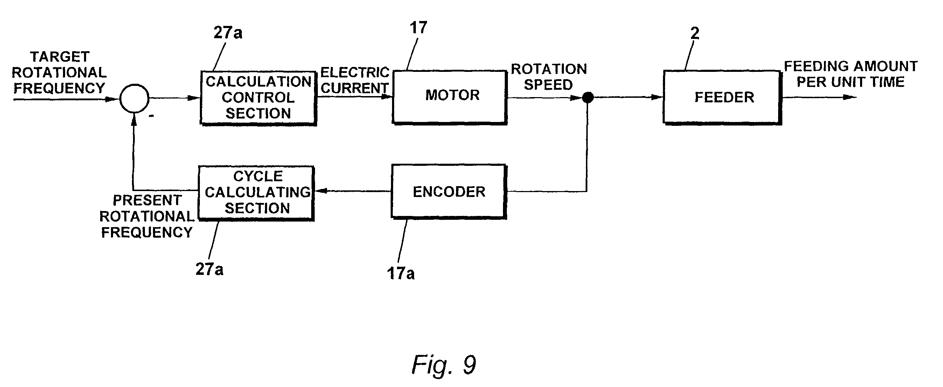

That is, as shown in Fig. 9, the target rotational frequency (bait amount) of the feeder motor 17 is previously set, and the electric current controlled by a calculation control section of the control unit 27a of the control box 27 is applied to the feeder motor 17. Then, the feeder motor 17 rotates at a predetermined speed for rotating the screw conveyor 16, so that the bait sent into the feeder pipe 15 from the outlet pipe 12 of the hopper 1 via the inlet pipe 13 is sent out to the outlet chute 14 direction. By detecting the rotational frequency of the feeder motor 17 by an encoder 17a, calculating the detected pulse by a cycle calculating section of the control unit 27a for finding the present rotational frequency, and rotating the feeder motor 17 until the present rotational frequency coincides with the target rotational frequency, the bait can be sent out by a feeding amount per unit time.

Second, the load to be applied on the blade 3 differs either in scattering the bait by the blade 3 or without scattering the bait (that is, in the blade idling state). Accordingly, by measuring the electric current level of the dispersing motor 23 varied according to presence or absence of the load, whether the bait is present or absent can be judged.

Then, in the case the bait is judged to be absent, the control unit 27a of the control box 27 controls such that the rotation of the feeder motor 17 and the dispersing motor 23 is stopped.

Third, by measuring the electric current level of the dispersing motor 23 varied according to presence or absence of the load applied on the blade 3 at the time of scattering the bait in the second aspect, whether the bait is present or absent can be judged. In the case the bait is judged to be absent, the control unit 27a of the control box 27 controls such that the rotation of the feeder motor 17 and the dispersing motor 23 is continued at least for the time needed for sending out the bait from the hopper 1 to the blade 3.

Fourthly, the control unit 27a of the control box 27 controls such that at least one of an inviting feed of feeding a small amount of the bait before a main feed of feeding a large amount of the bait, and an addition feed of feeding a small amount of the bait after the main feed, is executed.

The operation of the hardware of the automatic feeding apparatus with the above-mentioned configuration will be explained. The pellet-like bait stored in the hopper 1 is sent out from the hopper 1 quantitatively by the screw conveyor 16 rotated by the feeder motor 17 of the screw feeder 2 and is then sent out from the feeder pipe 15 to the outlet chute 14 via the lacked part 16c, which is the sending tip end of the screw conveyor 16. The bait slid down from the outlet chute 14 is scattered to the surroundings by the blade 3 rotated by the dispersing motor 23, so as to be fed automatically to the fish preserve 4.

As to the hardware, the self-supporting frame 11 with the hopper 1, screw feeder 2, the blade 3, and the like, previously assembled therein can be mounted detachably on the basic frame 10 previously mounted on the fish preserve 4. Therefore, in the case of emergency evacuation due to approach of typhoon, or the like, by only detaching the self-supporting frame 11 from the basic frame 10 by loosening and detaching the four bolts 20 and moving the self-supporting frame 11 onto the deck of a ship by a crane, the entirety of the automatic feeding apparatus can be moved from the fish preserve 4 simply and quickly. Specifically, since only the four bolts 20 need to be loosened and detached, the detachment and displacement to the deck of the ship of the self-supporting frame 11 can be completed in about 5 minutes per one set. Therefore, even in the case total 20 sets of the automatic feeding apparatus are installed, the evacuating operation can be completed in about 100 minutes (1 hour and 40 minutes), and thus the operation can be completed sufficiently from the typhoon approaching information announced 2 hours in advance.

Moreover, the self-supporting frame 11 can be placed temporarily on the deck of a ship or on a quay with the four foot brackets 11 a as it is. Furthermore, since the hopper 1, screw feeder 2, the blade 3, and the like, are assembled in the self-supporting frame 11, there is no risk of damaging these components.

Furthermore, since the screw feeder 2 can be swung at the blade 3 side with the inlet pipe 13 at the hopper 1 side as the fulcrum, the blade (feeding) position can be changed according to the state of the fish preserve 4. In addition, the maintenance work such as repair can be executed easily by swinging the blade 3 to the scaffolding 6 position of the fish preserve 4.

Moreover, since the blade 3 can be tilted in the vertical direction, the distribution state of the scattering of the bait and the scattering distance of the bait can be changed.

Still further, since the lacked part 16c is formed in the screw of the screw conveyor 16 at the front shaft end part 16a side, the bait sent out by the screw conveyor 16 can be pushed out while temporarily stored at the lacked part 16c, and thus the bait can be sent out without fluctuation so as to enable the continuous feed of the bait.

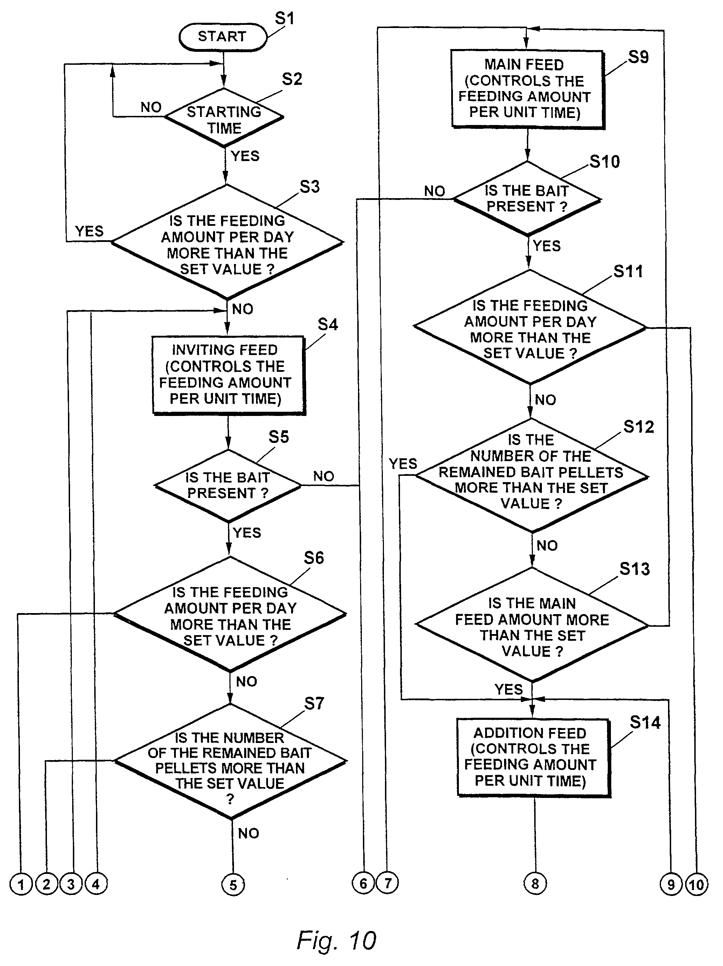

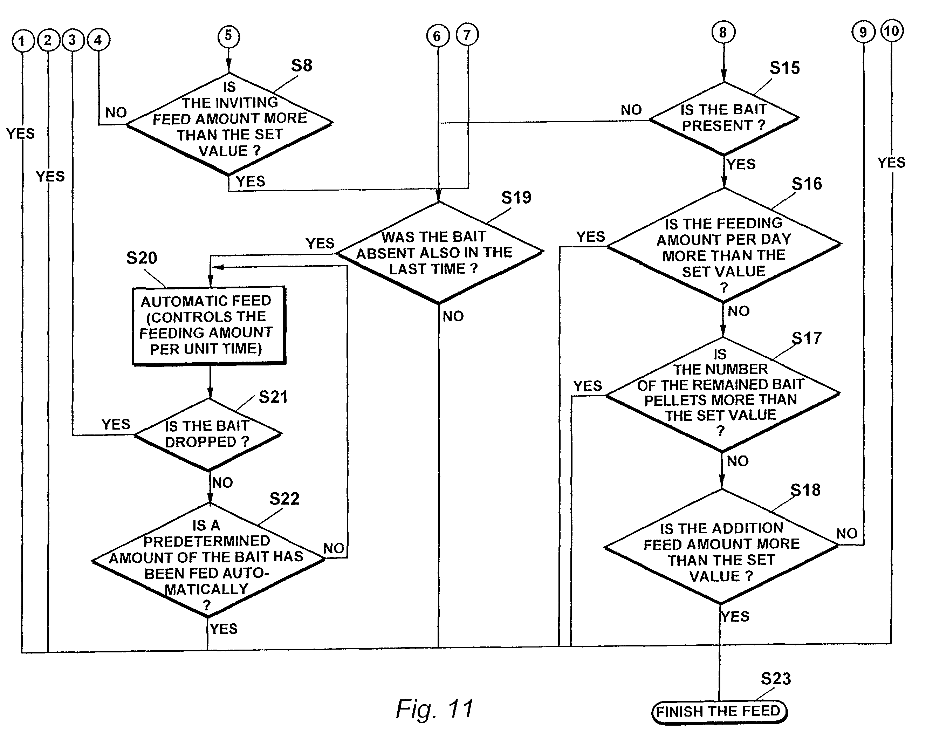

Next, the operation of the software of the automatic feeding apparatus will be explained with reference to a flow chart in Figs. 10 and 11. Figs. 10 and 11 are connected continuously in the vertical direction at the same numerals 1 to 9 in both figures.

The flow starts at the step S1, and whether or not the starting time has come is judged at the step S2. As the starting time, for example, 6 times including 8:00, 8:10, 10:00, 10:10, 14:00, and 16:00 are set in the control unit 27a of the control box 27. The set times and the number of the feeding operation can be changed optionally. The feeding operation is repeated twice in 8:00s and 10:00s with a 10 minute interval because some of the cultivated fishes (in particular, the young yellowtails) may not show the appetite in the initial inviting feed and if the main feed is started in the state without showing the appetite of the fishes, the bait would be wasted. Therefore, the inviting feed is executed again after 10 minutes for attracting the appetite.

In the case it is NO in the step S2, the step S2 is repeated until it becomes YES. If it is YES in the step S2 (for example, 8:00), whether the feeding amount per day is more than the set value is judged in the step S3. That is, since the feeding amount (for example, 300 kg) per day can be preset according to the cultivated fish, in the case it is more than the set value (YES), the sensor of the feeding amount may be broken down. Therefore, in order to avoid the wasteful feed, it returns to the step S2.

If it is NO in the step S3, the inviting feed is started in the step S4. In the inviting feed, the bait is fed by about 3 kg a minute for only a few minutes according to the drive of the feeder motor 16 and the dispersing motor 23 so as to attract the appetite of the cultivated fishes.

Whether or not the bait is present in the hopper 1 is judged in the step S5. The judgment is made by measuring the electric current level of the dispersing motor 23 varied according to presence or absence of the load applied on the blade 3 for scattering the bait. In the case there is no load, the bait is judged to be absent in the hopper 1 (NO). The routine in the case it is judged to be NO in the step S5 will be explained afterwards.

If it is YES in the step S5, whether the feeding amount per day is more than the set value is judged in the step S6 as in the step S3. In the case it is YES, in order to avoid the wasteful inviting feed, the feeding operation is finished at the step S23 (The rotation of the feeder motor 17 and the dispersing motor 23 is stopped. The same is applied hereinafter). In the case it is NO, whether or not the number of the remained bait pellets is more than the set value is judged in the step S7. The judgment is made by detecting the number of the bait pellets fed and sunk in the sea (number of the remained bait pellets) by a sensor. For example, 5 pellets per 1 minute can be the set value. A number per 1 minute less than 5 pellets means that the cultivated fishes have good appetite so as to reduce the number of the remained bait pellets. A number of 6 remained pellets or more means that the cultivated fishes have poor appetite so as to increase the number of remained bait pellets. If it is YES, in order to avoid the wasteful inviting feed, the feeding operation is finished at the step S23.

In the case of the inviting feed, as explained in the step S2, the inviting feed is repeated twice in 8:00s and 10:00s with a 10 minute interval so as to attract the appetite of the cultivated fishes, which didn't show the appetite in the initial inviting feed, in the inviting feed after 10 minutes.

If it is NO in the step S7, whether the inviting feed amount is more than the set value is judged in the step S8. If it is NO in the step S8, it returns to the step S4 so as to repeat the routine of the inviting feed.

If it is YES in the step S8, the main feed is started in the step S9. In the main feed, the bait is fed by about 10 kg a minute by the drive of the feeder motor 16 and the dispersing motor 23.

In the step S10, whether or not the bait is present in the hopper 1 is judged in the step S10 as in the step S5. The routine in the case it is judged to be NO will be explained afterwards.

If it is YES in the step S10, whether the feeding amount per day is more than the set value is judged in the step S11 as in the step S3. If it is YES, in order to avoid the wasteful main feed, the feeding operation is finished at the step S23. If it is NO, whether or not the number of the remained bait pellets is more than the set value is judged in the step S12 as in the step S7. If it is YES, it moves to the routine of the addition feed in the step S14.

If it is NO in the step S12, whether the main feed amount is more than the set value is judged in the step S13. If it is NO in the step S13, it returns to the step S9 so as to repeat the routine of the main feed.

If it is YES in the step S13, the addition feed is started in the step S14. In the addition feed, the bait is fed by about 3 kg a minute by the drive of the feeder motor 16 and the dispersing motor 23. A chance of feeding to the weak cultivated fishes, which failed to eat in the main feed, can be given in the addition feed in place of the strong cultivated fishes, which have satisfied their appetite in the main feed.

In the step S15, whether or not the bait is present in the hopper 1 is judged as in the step S5. The routine in the case it is judged to be NO will be explained afterwards.

If it is YES in the step S15, whether the feeding amount per day is more than the set value is judged in the step S16 as in the step S3. In the case it is YES, in order to avoid the wasteful addition feed, the feeding operation is finished at the step S23. In the case it is NO, whether or not the number of the remained bait pellets is more than the set value is judged in the step S17 as in the step S7. If it is YES, in order to avoid the wasteful addition feed, the feeding operation is finished at the step S23.

If it is NO in the step S17, whether the addition feed amount is more than the set value is judged in the step S18. If it is NO in the step S18, it returns to the step S14 so as to repeat the routine of the addition feed. If it is YES in the step S18, the feeding operation is finished at the step S23.

In contrast, in the case it is NO in the step S5, Step S10, and step S15, whether the bait was absent also in the last time is judged in the step S19. If it is NO in the step S19, it means that no bait is stored in the hopper 1 or the outlet of the hopper 1 is choked with the bait, and thus the feeding operation is finished at the step S23.

After replenishing the bait in the case no bait is stored in the hopper 1, or solving the problem of choking in the case the outlet of the hopper 1 is choked with the bait, the operation can be resumed from the step S1 (according to the controlling method, the operation can be resumed from the inviting feed in the step S4, the main feed in the step S9, or the addition feed in the step S14), and then the inviting feed can be started according to the drive of the feeder motor 16 and the dispersing motor 23 in the step S4 after the step S2 and the step S3. Since there is caused a time lag for the time of sending out the bait from the hopper 1 to the blade 3, the bait may be judged to be absent in the hopper 1 (NO) again in the step S5 during the time lag.

Therefore, if it is YES in the step S19, the control unit 27a of the control box 27 controls such that the rotation of the feeder motor 17 and the dispersing motor 23 is continued at least for the time needed for sending out the bait from the hopper 1 to the blade 3 in the step S20.

If the bait is judged to be present (YES) in the step S21 by measuring the electric current level of the dispersing motor 23, it returns to the step S4 for resuming the inviting feed. Moreover, in the case the bait is judged to be still absent (NO), whether or not a predetermined amount of the bait has been fed automatically is judged in the step S22. If it is NO, it returns to the step S20 so as to repeat the routine of the automatic feed. If it is YES in the step 22, the automatic feed is finished at the step S23.

The operation of the software of the automatic feeding apparatus with the above-mentioned configuration will be explained. Since the amount of the bait to be sent out for one rotation of the screw conveyor 16 of the screw feeder 2 can be previously measured (actual measurement), by controlling the rotational frequency of the feeder motor 17, the accurate quantitative supply of the bait can be enabled. In particular, conventionally, since the control has been executed only by the rotation time (few minutes) of the feeder motor 17, an error of about 5% has been generated, so as to lack the quantitative accuracy. However, according to the control of the rotational frequency of the feeder motor 17, the quantitative accuracy can be ensured with about only 1% error.

Moreover, whether the bait is present or absent is judged by measuring the electric current level of the dispersing motor 23 varied according to presence or absence of the load applied on the blade 3 at the time of scattering the bait. Then, in the case the bait is judged to be absent, the rotation of the feeder motor 17 and the dispersing motor 23 is stopped, whether the bait is present or absent can be judged certainly only by the measurement of the electric current level of the dispersing motor 23 as well as the wasteful consumption of the electric power can be restrained.

Furthermore, whether the bait is present or absent is judged by measuring the electric current level of the dispersing motor 23 varied according to presence or absence of the load applied on the blade 3 at the time of scattering the bait. Then, in the case the bait is judged to be absent, the rotation of the feeder motor 17 and the dispersing motor 23 is continued at least for the time needed for sending out the bait from the hopper 1 to the blade 3. Accordingly, by continuing the rotation of the feeder motor 17 and the dispersing motor 23 for the time needed for sending out the bait from the hopper 1 to the blade 3 after replenishing the bait in the case it is absent in the hopper 1, or after solving the problem of choking in the case the outlet of the hopper 1 is choked with the bait, unnecessary stoppage of the rotation of the feeder motor 17 or the dispersing motor 23 can be prevented, so as to continue the quantitative supply of the bait.

Still further, whether or not the main feed is necessary can be judged by observing the reaction of the appetite of the cultivated fishes by the inviting feed before the main feed. In addition, a chance of feeding to the weak cultivated fishes, which failed to eat in the main feed is given in the addition feed after the main feed, whereby the further efficient feed can be enabled. The inviting feed and the addition feed can be adopted selectively according to the kind of the cultivated fishes.

As is apparent from the explanation provided so far, it is provided an automatic feeding apparatus, comprising:
a hopper storing a bait;
a blade driven by a dispersing motor, for scattering the bait to the surroundings;
a screw feeder driven by a feeder motor and provided between the hopper and the blade, for sending out the bait toward the blade; and
a frame being divided into a self-supporting frame previously installed with at least the hopper, the screw feeder and the blade and a basic frame disposed on a predetermined position, the self-supporting frame being mounted detachably on the basic frame.

Thus, the self-supporting frame previously accommodating the hopper, the screw feeder, the blade, and the like is mounted detachably on the basic frame previously mounted on a fish preserve. Accordingly, in the case of emergency evacuation due to approach of typhoon, or the like, by only detaching the self-supporting frame from the basic frame so as to be moved onto the deck of a ship or the like, the entirety of the automatic feeding apparatus can be moved from the fish preserve simply and quickly. Moreover, the self-supporting frame can be temporarily placed on the deck of a ship or on a quay as it is without the risk of damaging the hopper, the screw feeder, the blade, or the like.

Preferably, the basic frame is previously mounted on a fish preserve.

Preferably, the screw feeder is swingable at the blade side with the hopper side as the fulcrum.

Thus, since the screw feeder can be swung at the blade side with the hopper side as the fulcrum, the blade (feeding) position can be changed according to the state of the fish preserve as well as the maintenance work such as repair can be executed easily by swinging the blade to the footing position of the fish preserve or the like.

Preferably, the blade is tiltable.

Thus, since the blade can be tilted, the distribution state of the scattering of the bait and the scattering distance of the bait can be changed.

As is apparent from the explanation provided so far, it is provided an automatic feeding method of scattering a bait stored in a hopper to the surroundings by a blade driven by a dispersing motor while sending out the bait by a screw feeder driven by a feeder motor, comprising the steps of:
previously measuring the amount of the bait to be sent out per one rotation of the screw feeder; and
controlling the rotational frequency of the feeder motor (17) on the basis of the measured amount of the bait per one rotation so that the bait is sent out quantitatively.

Thus, since the amount of the bait to be sent out per one rotation of the screw feeder is previously measured, by controlling the rotational frequency of the feeder motor, accurate quantitative supply of the bait can be enabled.

As is apparent from the explanation provided so far, it is provided an automatic feeding method of scattering a bait stored in a hopper to the surroundings by a blade driven by a dispersing motor while sending out the bait by a screw feeder driven by a feeder motor, comprising the steps of:
executing a main feed feeding a first amount of the bait; and
executing at least one of an inviting feed feeding a second amount of the bait less than the first amount before the main feed and an addition feed feeding a third amount of the bait less than the first amount after the main feed.

Thus, at least one of an inviting feed of feeding a small amount of the bait before a main feed of feeding a large amount of the bait, and an addition feed of feeding a small amount of the bait after the main feed is executed. Thus, whether or not the main feed is necessary can be judged by observing the reaction of the appetite of the cultivated fishes by the inviting feed before the main feed as well as a chance of feeding to the weak cultivated fishes, which failed to eat in the main feed, is given in the addition feed after the main feed, whereby the further efficient feed can be enabled.

Preferably, it is judging whether the bait is present or absent by measuring the electric current level of the dispersing motor varied according to presence or absence of the load applied on the blade at the time of scattering the bait; and
controlling the rotation of the feeder motor and the dispersing motor according to the presence or absence of the bait.

Thus, whether the bait is present or absent is judged by measuring the electric current level of the dispersing motor varied according to presence or absence of the load applied on the blade at the time of scattering the bait, and in the case the bait is judged to be absent, the rotation of the feeder motor and the dispersing motor is stopped. Accordingly, whether the bait is present or absent can be judged certainly only by the measurement of the electric current level of the dispersing motor as well as the wasteful consumption of the electric power can be restrained.

Preferably, the rotation of the feeder motor and the dispersing motor is stopped, when the bait is judged to be absent by the judging step.

Preferably, after the rotation of the feeder motor and the dispersing motor is stopped, the judging step is repeated, and the rotation of the feeder motor and the dispersing motor is performed at least for the time needed for sending out the bait from the hopper to the blade, when the bait is judged to be absent in the repeated judging step.

Thus, whether the bait is present or absent is judged by measuring the electric current level of the dispersing motor varied according to presence or absence of the load applied on the blade at the time of scattering the bait, and in the case the bait is judged to be absent, the rotation of the feeder motor and the dispersing motor is continued at least for the time needed for sending out the bait from the hopper to the blade. Therefore, by continuing the rotation of the feeder motor and the dispersing motor for the time needed for sending out the bait from the hopper to the blade after replenishing the bait in the case it is absent in the hopper, or after solving the problem of choking in the case the outlet of the hopper is choked with the bait, unnecessary stoppage of the rotation of the feeder motor or the dispersing motor can be prevented so as to continue the quantitative supply of the bait.

The bait as used in the above mentioned apparatus and the method is preferably formed in a cylindrical shape having a length in an axial direction thereof larger than its diameter.

## Claims

1. An automatic feeding method of scattering a bait stored in a hopper (1) to the surroundings by a blade (3) driven by a dispersing motor (23) while sending out the bait by a screw feeder (2) driven by a feeder motor (17), comprising the steps of:
executing a main feed feeding a first amount of the bait; and
executing at least one of an inviting feed feeding a second amount of the bait less than the first amount before the main feed and an addition feed feeding a third amount of the bait less than the first amount after the main feed.

2. An automatic feeding method according to claim 1, comprising the steps of:
previously measuring the amount of the bait to be sent out per one rotation of the crew feeder (2); and
controlling the rotational frequency of the feeder motor (17) on the basis of the measured amount of the bait per one rotation so that the bait is sent out quantitatively.

3. An automatic feeding method according to claim 1 or 2, further comprising the steps of:
judging whether the bait is present or absent by measuring the electric current level of the dispersing motor (23) varied according to presence or absence of the load applied on the blade (3) at the time of scattering the bait; and
controlling the rotation of the feeder motor (17) and the dispersing motor (23) according to the presence or absence of the bait.

4. An automatic feeding method according to claim 3, wherein the rotation of the feeder motor (17) and the dispersing motor (23) is stopped, when the bait is judged to be absent by the judging step.

5. An automatic feeding method according to claim 4, wherein, after the rotation of the feeder motor (17) and the dispersing motor (23) is stopped, the judging step is repeated, and the rotation of the feeder motor (17) and the dispersing motor (23) is performed at least for the time needed for sending out the bait from the hopper (1) to the blade (3), when the bait is judged to be absent in the repeated judging step.

6. An automatic feeding method according to at least one of the claims 1 to 5, wherein the bait is formed in a cylindrical shape having a length in an axial direction thereof larger than its diameter.

## Patentansprüche

1. Verfahren zur automatischen Fütterung durch Ausstreuen eines Lockmittels, das in einem Vorratsbehälter (1) gelagert ist, in das Umfeld durch einen Flügel (3), der durch einen Verteilmotor (23) angetrieben wird, währenddessen das Lockmittel durch einen Schneckenförderer (2) verteilt wird, der durch einen Förderermotor (17) angetrieben wird, mit den Schritten:
Ausführen einer Hauptfütterung, bei der eine erste Menge des Lockmittels verfüttert wird; und
Ausführen einer Lockfütterung, bei der eine zweite Menge des Lockmittels, die geringer ist als die erste Menge, vor der Hauptfütterung verfüttert wird und/oder einer Zusatzfütterung, bei der eine dritte Menge des Lockmittels, die geringer ist als die erste Menge, nach der Hauptfütterung verfüttert wird.

2. Verfahren zur automatischen Fütterung nach Anspruch 1, **gekennzeichnet durch** die Schritte:
Vorhergehendes Messen der Menge des Lockmittels, das pro Umdrehung des Schneckenförderers (2) verteilt wird; und
Steuern der Rotationsfrequenz des Förderermotors (17) auf der Basis der gemessenen Menge des Lockmittels pro Drehung, so dass das Lockmittel mengenmäßig verteilt wird.

3. Verfahren zur automatischen Fütterung nach Anspruch 1 oder 2, mit den weiteren Schritten:
Entscheiden, ob das Lockmittel vorhanden oder fehlend ist durch Messen des elektrischen Strompegels des Verteilmotors (23), der sich in Abhängigkeit vom Vorhandensein oder des Fehlens der Last ändert, die zum Zeitpunkt des Ausstreuens des Lockmittels auf den Flügel (3) aufgebracht wird; und
Steuern der Drehung des Förderermotors (17) und des Verteilmotors (23) entsprechend des Vorhandenseins oder des Fehlens des Lockmittels.

4. Verfahren zur automatischen Fütterung nach Anspruch 3, wobei die Drehung des Förderermotors (17) und des Verteilmotors (23) gestoppt wird, wenn durch die Entscheidungsstufe ermittelt wurde, dass Lockmittel fehlt.

5. Verfahren zur automatischen Fütterung nach Anspruch 4, wobei nach dem Stoppen der Drehung des Förderermotors (17) und des Verteilmotors (23) die Entscheidungsstufe wiederholt wird, und wobei die Drehung des Förderermotors (17) und des Verteilmotors (23) zumindest für die Zeit ausgeführt wird, die zum Verteilen des Lockmittels aus dem Vorratsbehälter (1) zu dem Flügel (3) erforderlich ist, wenn durch die wiederholte Entscheidungsstufe ermittelt wurde, dass das Lockmittel fehlt.

6. Verfahren zum automatischen Fütterung nach einem der Ansprüche 1 bis 5, wobei das Lockmittel in einer zylindrischen Form ausgebildet ist, die eine Länge in einer Axialrichtung aufweist, die größer als dessen Durchmesser ist.

## Revendications

1. Procédé d'alimentation automatique destiné à disperser un appât stocké dans une trémie (1) aux alentours à l'aide d'une lame (3) entraînée par un moteur de dispersion (23), tout en envoyant l'appât vers l'extérieur par l'intermédiaire d'un dispositif d'alimentation à vis (2) entraîné par un moteur de dispositif d'alimentation (17), comportant les étapes consistant à :
exécution d'une alimentation principale alimentant une première quantité de l'appât, et
exécution d'au moins une alimentation d'invitation alimentant une deuxième quantité de l'appât inférieure à la première quantité, avant l'alimentation principale, et d'une alimentation supplémentaire alimentant une troisième quantité de l'appât inférieure à la première quantité, après l'alimentation principale.

2. Procédé d'alimentation automatique selon la revendication 1, comportant les étapes consistant à :
mesure préalable de la quantité de l'appât à envoyer vers l'extérieur par une rotation du dispositif d'alimentation à vis (2), et
commande de la fréquence de rotation du moteur de dispositif d'alimentation (17) sur la base de la quantité mesurée de l'appât par rotation, de sorte que l'appât est envoyé vers l'extérieur de manière quantitative.

3. Procédé d'alimentation automatique selon la revendication 1 ou 2, comportant de plus les étapes consistant à :
détermination de la présence ou de l'absence de l'appât en mesurant le niveau de courant électrique du moteur de dispersion (23) modifié en fonction de la présence ou de l'absence de la charge appliquée sur la lame (3) au moment de la dispersion de l'appât, et
commande de la rotation du moteur de dispositif d'alimentation (17) et du moteur de dispersion (23) en fonction de la présence ou de l'absence de l'appât.

4. Procédé d'alimentation automatique selon la revendication 3, dans lequel la rotation du moteur de dispositif d'alimentation (17) et du moteur de dispersion (23) est arrêtée, lorsque l'appât est déterminé comme étant absent par l'intermédiaire de l'étape de détermination.

5. Procédé d'alimentation automatique selon la revendication 4, dans lequel, après que la rotation du moteur de dispositif d'alimentation (17) et du moteur de dispersion (23) a été arrêtée, l'étape de détermination est répétée, et la rotation du moteur de dispositif d'alimentation (17) et du moteur de dispersion (23) est effectuée au moins pendant le temps nécessaire pour envoyer l'appât à partir de la trémie (1) vers la lame (3), lorsque l'appât est déterminé comme étant absent pendant l'étape de détermination répétée.

6. Procédé d'alimentation automatique selon l'une au moins des revendications 1 à 5, dans lequel l'appât a une forme cylindrique dont la longueur est dans une direction axiale plus grande que son diamètre.
